Europäisches Patentamt

European Patent Office

Office européen des brevets

(19)

(11) Publication number: **0 350 106**
**A1**

# EUROPEAN PATENT APPLICATION

(12)

(21) Application number: 89201720.3

(51) Int. Cl.⁴ **H04N 5/232**

(22) Date of filing: 29.06.89

(30) Priority: 05.07.88 NL 8801698

(43) Date of publication of application:
**10.01.90 Bulletin 90/02**

(84) Designated Contracting States:
**DE FR GB NL**

(71) Applicant: **N.V. Philips' Gloeilampenfabrieken**
**Groenewoudseweg 1**
**NL-5621 BA Eindhoven(NL)**

(72) Inventor: **Ten Hoopen, Hendrik Gerrit**
**c/o INT. OCTROOIBUREAU B.V. Prof.**
**Holstlaan 6**
**NL-5656 AA Eindhoven(NL)**
Inventor: **Damstra, Nicolaas Johannes**
**c/o INT. OCTROOIBUREAU B.V. Prof.**
**Holstlaan 6**
**NL-5656 AA Eindhoven(NL)**

(74) Representative: **Kooiman, Josephus Johannes**
**Antonius et al**
**INTERNATIONAAL OCTROOIBUREAU B.V.**
**Prof. Holstlaan 6**
**NL-5656 AA Eindhoven(NL)**

(54) Detection circuit for an auto-focusing system for an image pick-up device.

(57) A circuit input (IT) carrying an input signal to be detected having a dynamic signal range of, for example, the order of magnitude of 2000 is connected to a circuit output (OT) via a series arrangement of a filter circuit (F) and a rectifier circuit (PDR) and integration circuit (INT) of a specific design, for supplying a detection signal having a dynamic signal range in the order of magnitude of 100. To that end the rectifier circuit (PDR) comprises, interconnected in a junction point (P), a capacitor (C2), a leakage resistor (R14) and two rectifier transistors (T5, T6), as a result of which this circuit is basically operative as a peak detector. For an essential noise removal the junction point (P) is connected to a power supply terminal via an emitter-collector path of a biased transistor (T7). Furthermore the resettable integration circuit (INT) is given a non-linear, smoothed integration characteristic by biased diode-capacitor series arrangements (D1, C5, R18), (D2, D3, C6, R19).

## Detection circuit for an auto-focussing system for a camera for television, cine or photographic recording, respectively.

The invention relates to a detection circuit for an auto-focussing system for a camera for television, cine or photographic recording, respectively, wherein a circuit input carrying an input signal to be detected is coupled via a series arrangement of a filter circuit, a rectifier circuit and a resettable integration circuit operative with a picture, frame or field-frequency reset, respectively, to a circuit output for supplying an auto-focus detection signal related to a line and field-sequentially assembled picture.

Such a detection circuit for more specifically television recording is disclosed in the German Patent 3,223,879. The auto-focus detection signal is the integrated value of the high-frequency signal component originating from the picture. Herein the focus setting is effected in a sub-region of the picture. In addition to the fact that because of the choice of the position in the sub-region a specific picture portion can be selected for focussing, the dynamic signal range of the input signal to be detected can be adapted by the choice of the effective size of the sub-region. This provides an automatic gain control in the auto-focussing system. Disadvantages for such a control are the complexity of the circuit and control-technical complications, such as instabilities and discontinuities.

The invention has for its object to provide a simple detection circuit operative with an adequately wide dynamic range, without loss in sensitivity and without any automatic control. According to the invention, a detection circuit is characterized, in that the rectifier circuit includes, interconnected in a junction point, a capacitor, a leakage resistor and at least one rectifying transistor, the junction point further being coupled to a power supply terminal via an emitter-collector path of a transistor, the base of this transistor receiving a biasing voltage relative to a setting voltage applied to the base of the rectifying transistor, the junction point being coupled to an input of the integration circuit which has a non-linear, smoothed integration characteristic.

The combination of the rectifier circuit provided with the capacitor, because of which it basically is a peak detector, the biased transistor which provides noise removal as a result of which the rectified noise cannot reach the integration circuit, and the non-linear, smoothed integration characteristic have for their result a compression of the dynamic range, a dynamic input signal range having a factor of, for example, approximately two thousand resulting in a dynamic output signal range having a factor of the order of magnitude of one hundred.

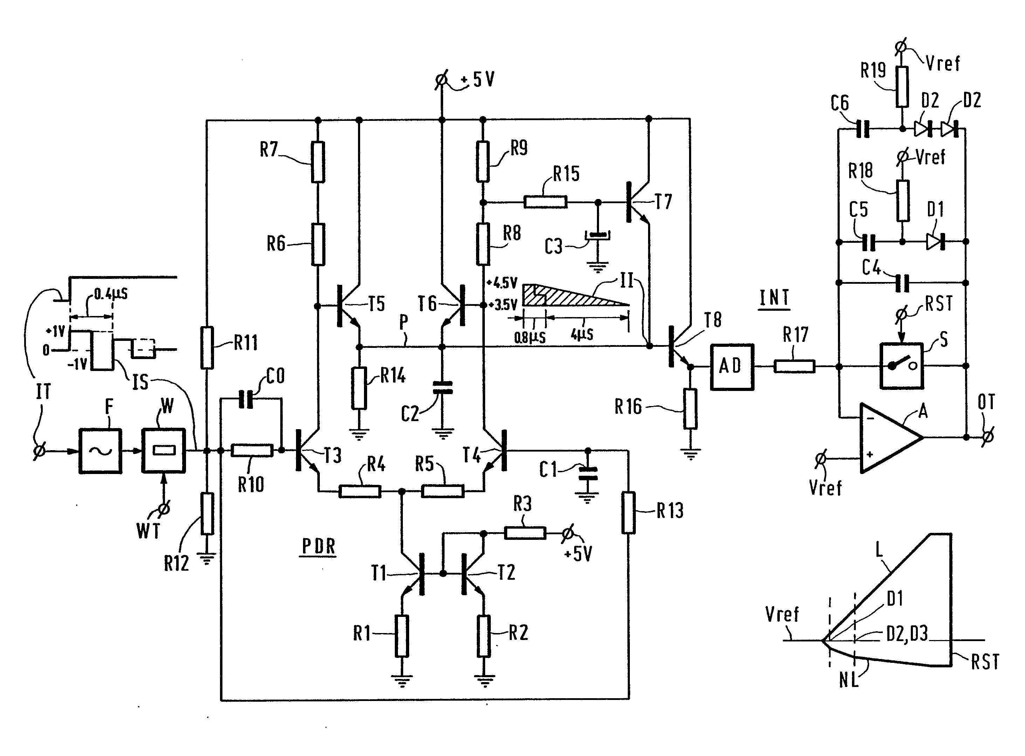

The invention will now be described in greater detail, by way of example, with reference to the accompanying drawing, the sole Figure being a circuit diagram of a detection circuit according to the invention.

In the Figure, IT denotes a circuit input for a detection circuit for an auto-focussing system for a camera for television, cine and photographically recording, respectively. OT denotes a circuit output. As regards the auto-focussing system, it should be noted that its design is irrelevant for the invention which relates to a detection circuit. For a possible system design reference is made to said Patent. For the detection circuit it is assumed that signal transitions related to contrasts in a colour or monochrome picture are present in a picture signal IT applied to the identically designated circuit input. On display the picture signal IT results in a line and field-sequentially assembled picture. The Figure shows, as an example for the picture signal IT, a signal transition, for example a black-white transition. The input IT is coupled to an input of a filter circuit F which is followed by what is commonly referred to as a window circuit W, to which a window signal is applied via an input WT. The filter circuit F may be designed as a highpass or bandpass filter circuit or may be a differentiating circuit or a combination of these types. Irrespective of the filter design, it is assumed that the picture signal IT shown results, for example, in a signal IS shown at the output of the window circuit W. The signal IS relates, for example, to a sub- region of the picture, in the shape of a window For television having a field period of 20ms thoughts may go towards a window of half a picture height and half a picture width, which corresponds to an integration time period of 5 ms. By way of example, the signal IS has a schematically shown square- wave pulse pattern having a variation of 0 V, + 1 V, -1 V, +0.5 v, -0.5 V, 0 V. A possible pulse period is indicated by 0.4μs, with which a pulse frequency of 2.5 MHz is associated. A full-wave rectification of the signal IS, mentioned as an example, results in a variation of 0 V, + 1 V, + 0.5 V, 0V over 0.8μs. If after the full-wave rectification a signal content is defined as a product of voltage and time, a signal content of 0.6 V.μs is obtained for the rectified signal IS. Let it further be assumed that not less than a minimum of four signal transitions in the picture signal IT must be detected, it then follows that the smallest signal content to be detected is equal to 2.4 V.μs. Starting from the window having a duration of 5 ms, this window having a 2.5 MHz pattern between 1 V and 0 V, a maximum signal content of 5 V.ms is obtained therefrom. This has an associated dynamic signal range of 5000/2.4 = 2083. To enable processing of such a dynamic signal range in the order of magnitude of 2000, the Figure shows the detection circuit having a rectifier circuit PDR of a specific design, in this case a full-wave rectifier, and integration circuit INT between the input IT and the output OT.

The rectifier circuit PDR comprises eight npn-transistors denoted by T1 to T8. The emitters of the transistors T1 and T2 are connected to ground via respective resistors R1 and R2. The base and the collector of the transistor T2 are connected to a power supply terminal carrying a voltage of +5 V, via a resistor R3. The +5 V voltage is obtained from a voltage source, not shown, a further terminal of which is connected to ground. The transistors T1 and T2 and the resistors R1, R2 and R3 together form a current source (T1, T2, R1, R2, R3) in the form of a so-called current mirror. Herein the collector of the transistor T1 is connected to emitters of the transistors T3 and T4 via respective resistors R4 and R5. The collector of the respective transistors T3 and T4 is connected to the power supply terminal carrying the voltage of +5 V via two series resistors R6, R7 and R8, R9, respectively. The base of the transistor T3 is connected via a resistor R10 to a junction point between two resistors R11 and R12 provided between the power supply terminal carrying the +5 V voltage and ground. For an appropriate high-frequency coupling the resistor R10 is shunted by a capacitor C0. The junction point of the resistors R10, R11 and R12 and the capacitor C0 is connected to the output of the window circuit W and via a resistor R13 is connected to the base of the transistor T4 which is connected to ground via a capacitor C1. The collector of the respective transistors T3 and T4 is connected to a base of the respective transistors T5 and T6, whose collectors are connected ti the +5 V power supply terminal. The emitters of the transistors T5 and T6 are connected to ground via a parallel arrangement of a resistor R14 and a capacitor C2. In addition, the emitters of the transistors T5 and T6 are connected to an emitter of the tranistor T7 and to a base of the transistor T8. A collector of the transistor T7 is connected to the +5V power supply terminal and a base is connected via a resistor R15 to the junction point between the resistors R8 and R9 and is further connected to ground via a capacitor C3. A collector of the transistor T8 is connected to the +5V power supply terminal and an emitter is connected to ground via a resistor R16. P denotes the junction point of the capacitor C2, the leakage resistor R14 and the rectifying transistors T5 and T6, the junction point P further being connected to the +5 V power supply terminal via the emitter-collector path of the transistor T7. Via the resistor R15 and the smoothing capacitor C3 the transistor T7 is provided with a bias voltage relative to the equal setting voltages on the basis of the rectifier transistors T5 and T6. The full-wave rectifier circuit PDR is designed as a differential amplifier having an emitter-follower output (T8, R16) and having the bases of the transistors T3 and T4 as its inputs. To explain the operation of the rectifier circuit PDR in which the presence of the capacitor C2 is essential, a signal II occurring at the junction point P is shown by way of illustrtion. Instead of the full-wave rectification described, half-wave rectification can be applied, for example (at least) one rectifying transistor, comparable to the transistor T5 or T6, then being present.

Let it be assumed that the O-level of the signal IS correspond to +3.5V in the signal II. The transistors T5 and T6 then carry equal currents. A positive voltage in the signal IS results in a lower voltage at the base of the transistor T5, causing this transistor to be non-conductive and the transistor T6 to carry more current. A negative voltage in the signal IS results in a higher voltage at the base of the transistor T5, causing this transistor to carry more current, whilst the transistor T6 is cut-off. In both cases the voltage in the junction point P increases, which is shown in the signal II for the period of time of 0.8μs for a pulse between +4.5V and +3.5 V. The use of the capacitor C2 and the leakage resistor R14 however results in that the signal IS shown is not simply present with full-wave rectification on the junction point P, but with rectified peaks. Starting from a determined RC-time constant of the capacitor C2, the leakage resistor R14 and the emitter resistor of the transistor T5 or T6 and of the signal IS shown the transistors T5 and T6 are rendered conductive again after, for example, 0.8 + 4μs. It is apparent that the full-wave rectifier circuit PDR is operative as a peak detector. In this situation there is a signal content, shown as a hatched portion in the drawing, of approximately 0.5 x 1 V x 4.8μs = 2.4 V.μs for one signal transition. Based on the minimum number of four signal transitions to be detected, with a duration of at least 4.8μs between them, a factor of 5000/(4 x 2.4) = 521 is obtained for the dynamic signal range. A compression factor equal to four results. The use of the peak detection provides that particularly the sharpness of the strongest signals is detected and that therein the very significant reduction of the dynamic signal range is obtained.

The occurrence of noise in the signal IS will lead to a complication when no further measures are taken, as the noise is rectified and this rectified noise in the signal II will arrive in the integration circuit INT via the emitter-follower transistor T8, as a result of which the dynamic range at the output thereof will unnecessarily be reduced. The rectified noise must therefore be removed. To that end the biased transistor T7 is provided in the detection circuit. In the case the transistor T5 or T6 is highly conductive, the transistor T7 is non-conducting, in the presence of only noise, neither of the two transistors T5 and T6 being highly conductive, the transistor T7 is conducting, causing the noise to be removed via the collector-emitter path. Using the two described measures, the peak detection and the noise suppressor required therefore, a compression of the dynamic range by a factor of 4 is obtained.

A still further compression is achieved by the specific design of the integration circuit INT. The circuit INT includes a differential amplifier A, a (-) input of which is coupled to the emitter of the emitter-follower transistor T8 via a resistor R17 and an adapting circuit AD. The adapting circuit AD provides a voltage level adaptation and may, for example, include a clamping circuit. A ( + ) input of the differential amplifier A is connected to a terminal carrying a reference voltage Vref. The output of the differential amplifier A is connected to the circuit output OT and is fed back to the (-) input. The voltage Vref is present with such a value that on application of this voltage value to the resistor R17, the output of the differential amplifier A carries the potential of Vref desired at that place. The feedback circuit comprises, arranged in parallel, a capacitor C4, a reset circuit S and two biased diode-capacitor series arrangements (D1, C5, R18) and (D2, D3, C6, R19). The reset circuit S has a switching input which is connected to an input RST to which an identically referenced reset signal is applied. The reset signal RST is operative in known manner for a reset in the signal integration with the capacitor C4. The cathode of a diode D1 is connected to the differential amplifier output, the anode being connected via a resistor R18 to a terminal carrying the reference voltage Vref and via a capacitor C5 to the (-) input. In a similar manner a capacitor C6, a resistor R19 and two series diodes D2 and D3 instead of the diode D1, are interconnected. During resetting of the capacitor C4 the capacitors C5 and C6 discharge across the respective resistors R18 and R19. In the Figure the integration characteristic is denoted by NL. The characteristic NL is a non-linear, smoothed characteristic, L being indicated with a linear variation. Starting from the linear variation L as a function of time, the diode D1 becomes conductive at an instant denoted by D1, the diodes D2 and D3 becoming likewise conductive at a later instant D2, D3. The slope related to the reset is designated by RST. Let is be assumed that the capacitances of the capacitors C4, C5 and C6 are in a ratio of 1 : 2 : 6. In this situation the integration circuit INT is operative with three capacitances C4, C4 + C5 and C4 + C5 + C6 with a ratio of 1 : 3 : 9. If only the capacitor C4 would integrate then 1 + 3 + 9 = 13 output voltage steps correspond to three equal output voltage steps across these three capacitances given by the diode threshold voltages of, for example, 0.6 V, so that a compression factor of 13/3 = 4.3 is obtained. The total compression factor of the rectifier circuit PDR and the integration circuit INT is then equal to 4 x 4.3 = 17.2. This compresses the dynamic input signal range into a dynamic output signal range of 2083/17.2 = 121. The detection result with this dynamic signal range can be converted into an 8-bit word for further digital signal processing, more specifically before the occurrence of the reset pulse in the signal RST.

In practice it is found that the focussing method in accordance with the what is commonly referred to as "mountain climbing" is advantageous at the use of the non-linear integration. In this method additional measures must be taken in the event of a significant defocussing as at the then prevailing non-steep slope the proper direction of the focussing readjustment is difficult to determine. The detection result obtained by means of the compression of the dynamic signal range appears to facilitate the determination of the direction.

As an example of a detection circuit according to the invention the following values are given for the resistors and the capacitors:
$R1 = R2 = 220\Omega$, $R3 = 2,2k\Omega$, $R4 = R5 = 330\Omega$, $R6 = R8 = 51\Omega$, $R7 = R9 = 1k\Omega$, $R10 = R13 = 15k\Omega$, $R11 = R12 = R15 = 22k\Omega$, $R14 = R18 = R19 = 5,6k\Omega$, $R16 = 6,8K\Omega$, $R17 = 10k\Omega$, $C0 = C2 = 3$, $3nF$, $C1 = C6 = 100nF$, $C3 = 1\mu f$, $C4 = 15nF$, $C5 = 33nF$.

## Claims

1. A detection circuit for an auto-focussing system for a camera for television, cine or photographic recording, respectively, wherein a circuit input carrying an input signal to be detected is coupled via a series arrangement of a filter circuit, a rectifier circuit and a resettable integration circuit operative with a picture, frame or field-frequency reset, respectively, to a circuit output for supplying an auto-focus detection signal related to a line and field-sequentially assembled picture, characterized in that the rectifier circuit includes, interconnected in a junction point, a capacitor, a leakage resistor and at least one rectifying transistor, the junction point further being coupled to a power supply terminal via an emitter-collector path of a transistor, the base of this transistor receiving a biasing voltage relative to a setting voltage applied to the base of the rectifying transistor, the junction point being coupled to an input of the integration circuit which has a non-linear, smoothed integration characteristic.

2. A detection circuit as claimed in Claim 1, characterized in that the rectifier circuit includes a differential amplifier having an emitter-follower output comprising a transistor a base electrode of which is coupled to a or the power supply terminal, respectively, via the capacitor and the leakage resistor and the emitter-collector path of the biased transistor, respectively.

3. A detection circuit as claimed in claim 1 or 2, characterized in that the integration circuit includes a differential amplifier an output of which is fed back via a resetting circuit and via at least one biased diode-capacitor series arrangement to an amplifier input coupled to the rectifier circuit.

4. A detection circuit as claimed in claim 3, characterized in that to obtain a biasing voltage the biased diode-capacitor series arrangement is coupled to a terminal carrying a reference voltage which is further applied to another input of the differential amplifier.

EP 0 350 106 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 301 478 (SAKANE)<br>* Column 5, lines 6-49; figure 6 *<br>--- | 1 | H 04 N 5/232 |
| A | EP-A-0 031 483 (HUGUES AIRCRAFT CO.)<br>* Page 5, line 1 - page 7, line 6; page 10, line 31 - page 11, line 22; figures 1,4 *<br>--- | 1 | |
| A | US-A-3 918 071 (ALBRECHT)<br>* Column 2, line 45 - column 3, line 24; figure 2 *<br>--- | 1 | |
| A | TIETZE et al.: "Halbleiter - Schaftungs-technik", 5th edition, 1980, pages 675-676, Springer Verlag, Berlin, DE<br>* Pages 675-676 *<br>----- | 2 | |

TECHNICAL FIELDS SEARCHED (Int. Cl.5)

H 04 N 5
G 03 B 3
G 02 B 7
H 03 H 11

The present search report has been drawn up for all claims

| Place of search | Date of completion of the search | Examiner |
|---|---|---|
| THE HAGUE | 08-09-1989 | DUHR R.H.J.E. |